# EUROPÄISCHE PATENTSCHRIFT

(11) **EP 0 930 144 B1**
(45) Veröffentlichungstag und Bekanntmachung des Hinweises auf die Patenterteilung: **30.06.2004**
(21) Anmeldenummer: 99250004.1
(22) Anmeldetag: 05.01.1999
(51) Int. Cl.: B29C 45/58

(54) **Spritzgiessmaschine**
Injection moulding machine
Machine à mouler par injection

(30) Priorität: 20.01.1998 DE 19802874
(43) Veröffentlichungstag der Anmeldung: 21.07.1999
(73) Patentinhaber: Demag Ergotech GmbH, 90571 Schwaig (DE)
(72) Erfinder: Grunitz, Otto, 06571 Wiehe (DE)
(74) Vertreter: Meissner, Peter E., Dipl.-Ing.

(56) Entgegenhaltungen:
- EP-A- 0 655 308
- DD-A- 152 307
- DE-B- 1 186 608
- US-A- 5 202 066
- PATENT ABSTRACTS OF JAPAN vol. 005, no. 097 (M-075), 24. Juni 1981 (1981-06-24) & JP 56 042637 A (MATSUSHITA ELECTRIC WORKS LTD), 20. April 1981 (1981-04-20)
- PATENT ABSTRACTS OF JAPAN vol. 014, no. 172 (M-0958), 4. April 1990 (1990-04-04) -& JP 02 026722 A (TOYO MACH & METAL CO LTD), 29. Januar 1990 (1990-01-29)
- PATENT ABSTRACTS OF JAPAN vol. 1998, no. 01, 30. Januar 1998 (1998-01-30) -& JP 09 254219 A (MATSUSHITA ELECTRIC WORKS LTD), 30. September 1997 (1997-09-30)
- PATENT ABSTRACTS OF JAPAN vol. 014, no. 060 (M-0931), 5. Februar 1990 (1990-02-05) & JP 01 286814 A (INOUE JAPAX RES INC), 17. November 1989 (1989-11-17)

## Beschreibung

Die Erfindung betrifft eine Spritzgießmaschine gemäß dem Oberbegriff der Patentansprüche 1 und 2.

Eine derartige Spritzgießmaschine ist aus der US-A-5202066 bekannt.

Aus DE-Gbm 91 06 039 ist eine Zahnfleischmassage-Bürste mit einem Handgriff bekannt, bei dem die endgültige fertige Form der Bürste durch ein Abfalten an zwei Faltachsen durch ein örtliches Weichmachen bekannter Kunststoffe, u.a. durch Ultraschall, erfolgt.

Bei dem Gegenstand dieses bekannten Gebrauchsmusters wird also das fertige Bauteil, nicht aber die Kunststoffmasse in der Spritzgießmaschine, durch Ultraschall behandelt.

Üblicherweise wird die Kunststoffschmelze durch eine Schnecke im Spritzgießzylinder durchmischt. Diese Durchmischung der Kunststoffschmelze erfordert eine relativ hohe mechanische Antriebsleistung und verursacht Verschleißerscheinungen sowohl an der Schnecke wie auch am Zylinder.

Um bestimmte Homogenitäten der Schmelze zu erreichen, sind Längen-/Durchmesser-Verhältnisse größer 20 notwendig. Dies verlängert die Bauform der jeweiligen Spritzeinheit wesentlich. Außerdem kann auf den Reibwert der Schmelze beim Passieren der Angußbohrung kein Einfluß genommen werden.
Eine negative Folge der hohen Reibkräfte in der Spritzmasse, die während des Einspritzvorganges zum Ansteigen der Schmelzetemperatur führen, sind teilweise Verbrennungserscheinungen.

Die Erfindung hat sich das Ziel gesetzt, eine Spritzgießmaschine zu schaffen, bei der mit konstruktiv einfach aufgebauter Spritzgießeinheit der Einspritzwiderstand der Schmelze reduziert wird. Weiterhin soll ohne mechanische Mittel eine Homogenisierung auch verschiedener Schmelzenbestandteile erreicht werden.

Die Erfindung erreicht dieses Ziel durch die kennzeichnenden Merkmale der Patentansprüche 1 und 2. Die Unteransprüche zeigen vorteilhafte Weiterbildungen der Erfindung.

Erfindungsgemäß werden auf die Schmelze Kräfte ausgeübt, die diese zum Strömen anregt, indem mit einer Frequenz im Unterschallbereich eine periodische Relativbewegung zwischen dem Schmelzgießzylinder und der Materialfürdereinheit der Spritzgießmaschine erzeugt wird. Hierzu werden Schwingelemente vorgesehen, welche entweder an dem Spritzgießzylinder oder an der Materialfördereinheit angebracht sind. Die Schwingelemente sind dabei an einen Frequenzgeber angeschlossen, wobei der Frequenzgeber in einem Frequenzbereich einstellbar ist, in dem das mit dem Schwingelement verbundene Bauteil der Spritzgießmaschine in einer vorzugsweise harmonische Resonanzschwingung versetzt wird.

Die Schwingungen werden im Piezoschwinger erzeugt (z.B. Quarz oder Bariumtitanat u.ä.). Es handelt sich hierbei um Schwingungen, die sich entlang des Spritzgießzylinders bzw. der Materialfördereinheit ausbreiten. Das Verhältnis Länge der Materialfördereinheit, z.B. der Schneckenlänge, zur Wellenlänge des Ultraschalls ist auf Resonanz abzustimmen, sonst kommt es an der Schneckenspitze nicht zur Herausbildung der notwendigen Schwingungsamplitude.

Das Piezoelement ist hierzu unter Vorspannung zu halten. Einer vorteilhaften Ausgestaltung werden hier Spannschrauben vorgeschlagen, die Flansche halten, in dem der Piezogeber eingespannt ist.

Das Schwingelement kann hierbei mit dem Spritzgießzylinder verbunden sein. In diesem Fall ist der Spritzgießzylinder einschließlich seiner Spritzdüse vom Werkzeug schwingungsmäßig zu entkoppeln. Als Entkopplung wird eine Gleitdichtung oder ein Dämpfungselement vorgeschlagen.

In einer anderen vorteilhaften Ausgestaltung ist das Schwingelement zwischen der Matrialfördereinheit und dem Antrieb angeordnet. Soweit dabei die Materialfördereinheit als Schnecke ausgestaltet ist, sind Schleifkontakte vorzusehen, da die Schnecke neben der transversalen Bewegung auch rotiert. Die Materialfördereinheit kann aber auch als glattwandiger Kolben ausgestaltet sein, der über eine Antriebsstange mit dem Antrieb verbunden ist. Hierbei kann der Kolben rohrförmig ausgestaltet sein und das Schwingelement in dem der Spritzdüse zugeneigten Teil angeordnet werden.

Es können glattwandige Kolben eingesetzt werden, denn bei dem erfindungsgemäßen Gegenstand ermöglicht es der Homogenisierungsgrad des Ultraschalls, auf die Mischfunktion einer Schnecke zu verzichten. Hierdurch läßt sich bei gleicher Homogenisierungswirkung wie bei der Schneckenplastifizierung eine wesentlich einfachere Kolbenspritzeinheit aufbauen.

Bei der vorgeschlagenen Lösung werden also die Eigenschaften des Ultraschalls ausgenutzt, stark durchmischend auf inhomogene Schmelzen zu wirken. An den Grenzbereichen (Homogenitätsgrenze) kommt es zu Kräften, die Strömungen in der Schmelze erzeugen. Dabei ist es gleichgültig, ob es dabei um Korngrenzen nichtaufgeschmolzenen Granulats oder Farbpigmenten handelt. Weiterhin wird die zweite Eigenschaft des Ultraschalls ausgenutzt die darin besteht, die innermolekulare Reibung von Stoffen herabzusetzen, wenn diese dem Ultraschallfeld ausgesetzt werden. Je nach Grad der Reduzierung der inneren Reibung läßt sich mit der erfindungsgemäßen Ausgestaltung die notwendige Einspritzleistung reduzieren oder die Einspritzgeschwindigkeit bei gleicher Leistung steigen. Besonders bei großen Spritzgeschwindigkeiten stellt nämlich der Druckabfall über der Einspritzdüse den größten Anteil an der Gesamtspritzleistung dar.

Die dritte ausgenutzte Eigenschaft des Ultraschalls bei der Erfindung ist die Aufheizung des Granulats. Die Freisetzung der Wärme erfolgt dabei hauptsächlich an den Homogenitätsgrenzstellen, also da, wo noch Aufschmelzbedarf besteht.

Zusammenfassend zeigen sich die Vorteile wie folgt:
- Die Spritzleistung kann durch Verminderung der innermolekularen Reibung in der Schmelze reduziert werden
- Es kann auf teuere und komplizierte Plastifizierschnecken verzichtet werden.
- Die Schmelzehomogenität wird bei Problemmaterial verbessert.
- Bei Einsatz von Kolbenspritzeinheiten kann die Spritzeinheit verkürzt werden.
- Die Mischbarkeit von Zusatzstoffen wie Einfärbmittel und Fremdkomponenten wird verbessert.
- Der Verschleiß an den beweglichen Teilen wird reduziert.
- Die Homogenisierung der Schmelze, insbesondere für optische Anwendungen, wird verbessert.

Ein Beispiel der Erfindung ist in der beiliegenden Zeichnung dargelegt. Dabei zeigen die
- Figur 1: Eine Spritzgießmaschine mit Schnecke und Schwingelement zwischen Schnecke und Antriebsstange.
- Figur 2: Induktive Kopplung.
- Figur 3: Eine Spritzgießmaschine mit Kolben mit einem Schwingelement am Spritzgießzylinder.
- Figur 4: Eine Spritzgießmaschine mit Hohlkolben und dem Schwingelement zwischen Kolben und Antriebsstange.

Die Figuren zeigen jeweils ein bewegliches Werkzeugteil 11, das mit einem festen Werkzeugteil 12 einen Formhohlraum 13 bildet. Der feste Werkzeugteil 12 ist mit einer Spritzdüse 25 eines Spritzgießzylinders 21 verbunden. Am Spritzgießzylinder 21 ist eine Materialzufuhr 26 vorgesehen.

Weiterhin ist im Spritzgießzylinder 21 eine Materialfördereinheit 22 vorgesehen, die über eine Antriebsstange 52 mit einem Antrieb 51 verbunden ist.

Darüber hinaus ist an dem Spritzgießzylinder ein Thermofühler 81 vorgesehen, der über eine Meßleitung 82 mit einem Frequenzgeber 41 in Verbindung steht.

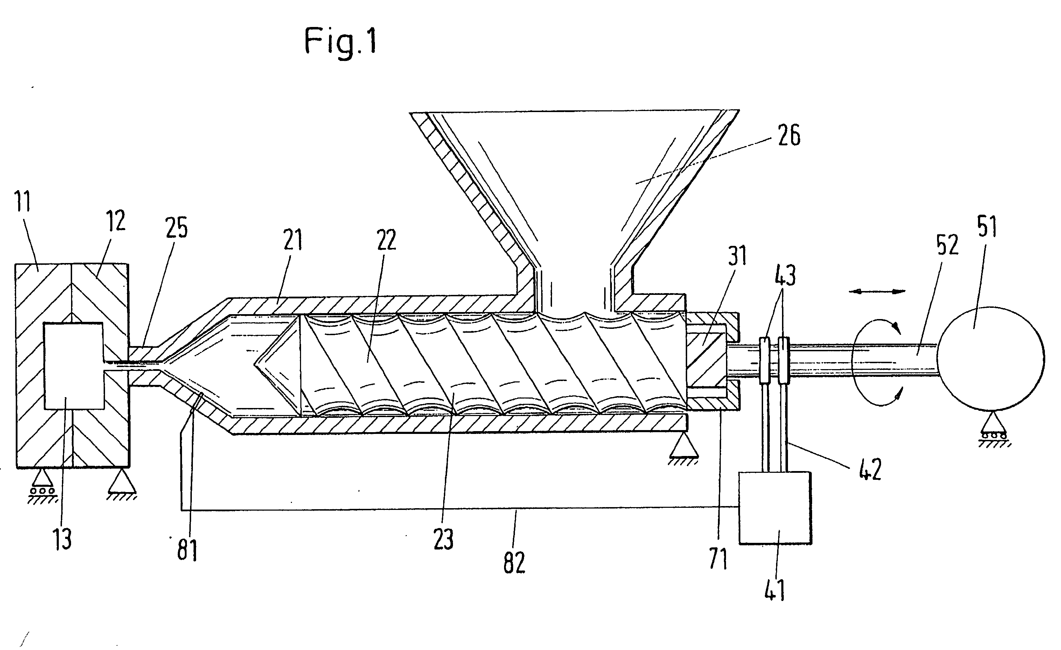

In der Figur 1 ist die Materialfördereinheit 22 als Schnecke 23 ausgestaltet, bei der fußendig ein Gehäuse 71 vorgesehen ist, welches ein Schwingelement 31 umgreift. Das Schwingelement 31 ist mit der an den Antrieb 51 angeschlossene Antriebsstange 52 verbunden. An der Antriebsstange 52 sind Schleifkontakte 43 vorgesehen, die über eine Verbindung 42 mit dem Frequenzgeber 41 verbunden sind.

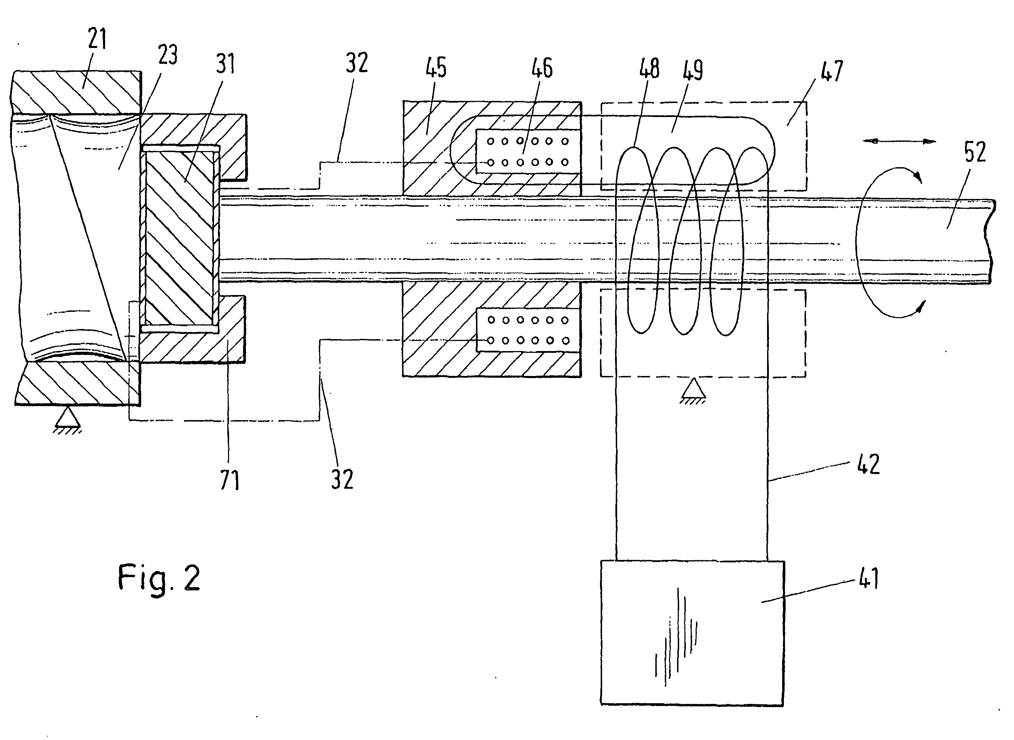

In der Figur 2 ist eine induktive Kopplung der Verbindung zwischen dem Generator 41 und dem Schwingelement 31 dargestellt. Dabei ist der Frequenzgeber 41 über Verbindungen 42 mit einer Spule 48 verbunden, die in einem Schalenkern 47 angeordnet ist. Der Schalenkern 47 umgreift die mit dem Antrieb 51 verbundene Antriebsstange 52 und ist fest mit dem Gehäuse der Schnecke verbunden. Die Spule 48 ist über ein Koppelfeld 49 magnetisch mit einer Spule 46 verbunden, welche in einem Schalenkern 45 angeordnet ist, der an der Antriebsstange 52 befestigt ist. Die Spule 46 ist über Verbindungen 32 mit dem Schwingelement 31 verbunden.

Das Schwingelement 31 ist von einem Gehäuse 71 umgriffen, welches an der in dem Spritzgießzylinder 21 vorgesehenen Schnecke befestigt ist.

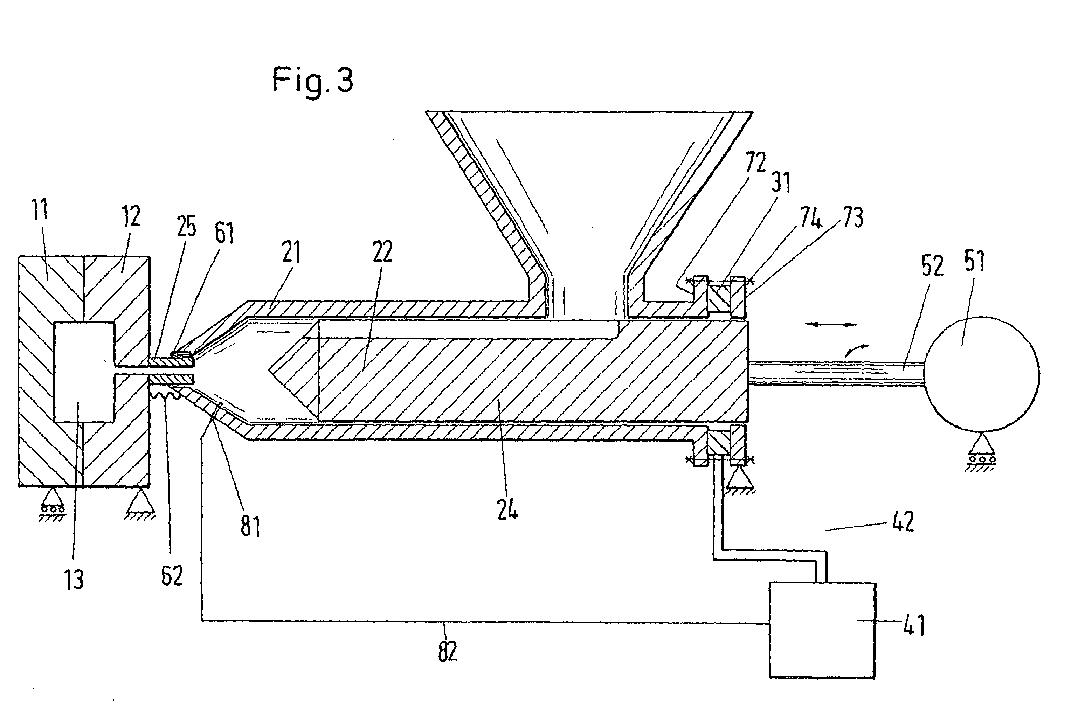

In der Figur 3 ist ein Schwingelement 31 vorgesehen, das unmittelbar mit dem Spritzgießzylinder 21 verbunden ist. Hierzu sind am Spritzgießzylinder 21 Flansche 72 und 73 angeordnet, die über Schrauben 74 das Schwingelement vorspannen und damit verhindern, daß die Eigenzerstörung des Schwingers in Folge seiner Dickenänderung während des Schwingvorganges eintritt:

Weiterhin ist bei der Figur 3 die Materialfördereinheit 22 als Kolben 24 ausgestaltet, dem fußendig die mit dem Antrieb 51 verbundene Antriebsstange 52 angeordnet ist.

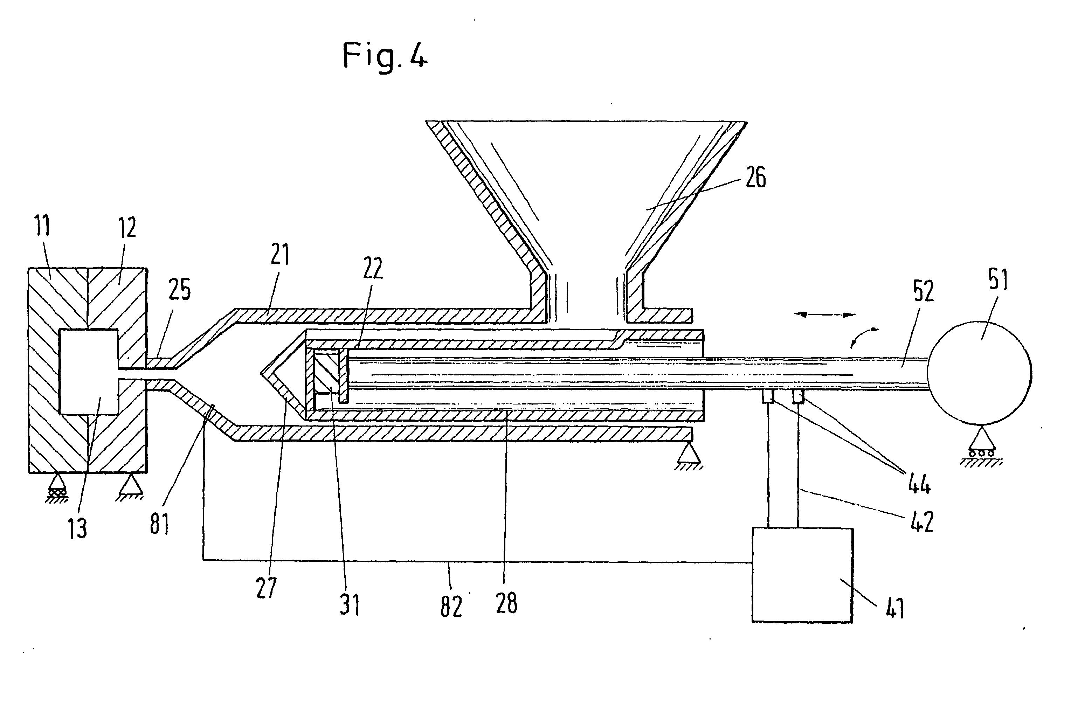

In der Figur 4 ist die Materialfördereinheit 22 als rohrförmiger Kolben 28 ausgestaltet. An der der Spritzdüse 25 zugeneigten Spitze des rohrförmigen Kolbens 28 ist ein Deckel 27 vorgesehen. Im Bereich des Deckels 27 ist das Schwingelement 31 angeordnet, welches mit der Antriebsstange 52 in Verbindung steht.

Im vorliegenden Fall ragt also die mit dem Antrieb 51 verbundene Antriebsstange 52 tief in den rohrförmigen Kolben 28 hinein.

An der Antriebsstange 52 sind Kontakte 44 vorgesehen, die über die Verbindung 42 mit dem Frequenzgeber 41 in Verbindung stehen. Die Drehbewegung der vorliegenden Antriebsstange 52 ist aber auf ein geringes Winkelmaß beschränkt, so daß die Kontakte 44 fest verbunden sein können und keine Schleifkontakte (vgl. Figur 1) erforderlich sind. Selbstverständlich kann wie in der Figur 2 dargestellt, die HF-Energie auf den Ultraschallkopf nach dem Prizip der induktiven Übertragung durchgeführt werden.

### Positionsliste

**Werkzeugeinheit**
   - 11: Bewegliches Werkzeugteil
   - 12: Festes Werkzeugteil
   - 13: Formhohlraum
**Spritzgießeinheit**
   - 21: Spritzgießzylinder
   - 22: Materialfördereinheit
   - 23: Schnecke
   - 24: Kolben (voll)
   - 25: Spritzdüse
   - 26: Materialzufuhr
   - 27: Deckel
   - 28: Rohrförmiger Kolben
**Schwinger**
   - 31: Schwingelement
   - 32: Verbindung
**Frequenzeinheit**
   - 41: Frequenzgeber
   - 42: Verbindung
   - 43: Schleifkontakt
   - 44: Kontakt
   - 45: Schalenkern (Welle)
   - 46: Spule (45)
   - 47: Schalenkern (Schneckengehäuse)
   - 48: Spule (47)
   - 49: Koppelfeld
**Antriebseinheit**
   - 51: Antrieb
   - 52: Antriebsstange
**Entkopplungselement**
   - 61: Gleitdichtung
   - 62: Dämpfungselement
**Verspanner**
   - 71: Gehäuse
   - 72,73: Flansche
   - 74: Schraubentemperatur
**Erfassung**
   - 81: Thermofühler

## Patentansprüche

1. Spritzgießmaschine mit einem Spritzgießzylinder, der fußendig eine trichterförmige Materialzufuhr (26) aufweist und kopfendig mit einer mit einem Werkzeug korrespondierenden Spritzdüse (25) versehen ist,
und einer Materialfördereinheit (22), die an einen Antrieb (51) angeschlossen ist und im Innenraum des Spritzgießzylinders (21) mindestens verschiebbar ist, wobei ein Schwingetement (31) vorgesehen ist, welches eine Retativbewegung zwischen dem Spritzgießzylinder (21) und der Materialfördereinheit (22) erzeugt, das Schwingelement (31) an einen Frequenzgeber (41) angeschlossen ist,
der Frequenzgeber (41) in einem Frequenzbereich einstellbar ist, in dem das mit dem Schwingelement (31) verbundene Bauteil (21, 22) der Spritzgießmaschine in Resonanzschwingung versetzbar ist,
**dadurch gekennzeichnet,**
**dass** das Schwingelement (31) zwischen der Materialfördereinheit (22) und dem Antrieb (51) angeordnet ist.

2. Spritzgießmaschine mit einem Spritzgießzylinder, der fußendig eine trichterförmige Materialzufuhr (26) aufweist und kopfendig mit einer mit einem Werkzeug korrespondierenden Spritzdüse (25) versehen ist,
und einer Materialfördereinheit (22), die an einen Antrieb (51) angeschlossen ist und im Innenraum des Spritzgießzylinders (21) mindestens verschiebbar ist, wobei ein Schwingelement (31) vorgesehen ist, welches eine Relativbewegung zwischen dem Spritzgießzylinder (21) und der Materialfördereinheit (22) erzeugt, das Schwingelement (31) an einen Frequenzgeber (41) angeschlossen ist,
der Frequenzgeber (41) in einem Frequenzbereich einstellbar ist, in dem das mit dem Schwingelement (31) verbundene Bauteil (21, 22) der Spritzgießmaschine in Resonanzschwingung versetzbar ist,
**dadurch gekennzeichnet,**
**dass** das Schwingelement (31) mit dem Spritzgießzylinder (21) verbunden ist,
und der Spritzgießzylinder (21) einschließlich der Spritzdüse (25) vom Werkzeug (12) schwingungsmäßig entkoppelt sind.

3. Spritzgießmaschine nach Anspruch 2,
**dadurch gekennzeichnet,**
**dass** die Entkopplung des Spritzgießzylinders (21) einschließlich der Spritzdüse (25) zum Werkzeug (12) als Gleitdichtung (61) ausgestaltet ist.

4. Spritzgießmaschine nach Anspruch 2,
**dadurch gekennzeichnet,**
**dass** zwischen der Spritzdüse (25) und dem Spritzgießzylinder (21) ein Dämpfungselement (62) angeordnet ist.

5. Spritzgießmaschine nach den Ansprüchen 1 oder 2,
**dadurch gekennzeichnet,**
**dass** das Schwingelement (31) in einem seiner achsialen Längung begrenzenden ein- oder mehrteiligen Gehäuse (71) plaziert ist.

6. Spritzgießmaschine nach den Ansprüchen 1 oder 2,
**dadurch gekennzeichnet,**
**dass** das Schwingelement (31) zwischen zwei Flanschen (72, 73) angeordnet ist, und
**dass** die Flansche (72, 73) über Spannschrauben (74) miteinander unter Vorspannung verbindbar sind.

7. Spritzgießmaschine nach den Ansprüchen 5 oder 6,
**dadurch gekennzeichnet,**
**dass** das Schwingetement (31) ein Piezoschwinger ist.

8. Spritzgießmaschine nach Anspruch 1,
**dadurch gekennzeichnet,**
**dass** die Materialförciereinheit (22) als Schnecke (23) ausgestaltet ist und
**dass** in der Verbindung (42) zwischen dem Schwingelement (31) und dem Frequenzgeber (41) ein Schleifkontakt (43) vorgesehen ist.

9. Spritzgießmaschine nach Anspruch 1,
**dadurch gekennzeichnet,**
**dass** die Materialfördereinheit (22) als Schnecke (23) ausgestaltet ist und
**dass** der Frequenzgeber (41) mit einer Spule (48) verbunden ist, die in einem die Antriebsstange (52) umgreifenden Schalenkem (47) angeordnet ist, und
**dass** die Spule (48) mit einer in einem Schalenkern (45) angeordneten Spule (46) magnetisch gekoppelt ist, die mit dem Schwingelement (31) verbunden ist.

10. Spritzgießmaschine nach Anspruch 1,
**dadurch gekennzeichnet,**
**dass** die Materialfördereinheit (22) als Kolben (24) ausgestaltet ist, der über eine Antriebsstange (52) mit dem Antrieb (51) verbunden ist.

11. Spritzgießmaschine nach Anspruch 1,
**dadurch gekennzeichnet,**
**dass** die Materialfürdereinheit (22) im wesentlichen als rohrförmiger Kolben (28) ausgestaltet ist und in dem der Spritzdüse (25) zugeneigten Teil durch einen Deckel (27) verschlossen ist, und
**dass** das Schwingelement (31) zwischen dem Deckel (27) und der Antriebsstange (52) angeordnet ist.

12. Spritzgießmaschine nach einem der vorgenannten Ansprüche,
**dadurch gekennzeichnet,**
**dass** mindestens ein Thermoelement (81), welches mit dem Frequenzgeber (41) verbunden ist, zur Erfassung der Temperatur der Schmelze vorgesehen ist.

13. Spritzgießmaschine nach Anspruch 12,
**dadurch gekennzeichnet,**
**dass** der Frequenzgeber (41) ein Ultraschallgeber ist, der in einem Frequenzbereich von 10-40 kHz arbeitet.

## Claims

1. Injection moulding machine, having an injection moulding cylinder, which has a funnel-shaped material feed (26) at the bottom end and is provided at the top end with an injection nozzle (25) corresponding to a tool,
and having a material conveying unit (22), which is connected to a drive (51) and is at least displaceable in the interior of the injection moulding cylinder (21), wherein a vibrating element (31) is provided which produces a relative movement between the injection moulding cylinder (21) and the material conveying unit (22), the vibrating element (31) is connected to a frequency transmitter (41), the frequency transmitter (41) is adjustable in a frequency range in which the component (21, 22) of the injection moulding machine, which component is connected to the vibrating element (31), can be set to vibrate in a resonant manner,
**characterised in that**
the vibrating element (31) is disposed between the material conveying unit (22) and the drive (51).

2. Injection moulding machine, having an injection moulding cylinder, which has a funnel-shaped material feed (26) at the bottom end and is provided at the top end with an injection nozzle (25) corresponding to a tool,
and having a material conveying unit (22), which is connected to a drive (51) and is at least displaceable in the interior of the injection moulding cylinder (21), wherein a vibrating element (31) is provided which produces a relative movement between the injection moulding cylinder (21) and the material conveying unit (22), the vibrating element (31) is connected to a frequency transmitter (41), the frequency transmitter (41) is adjustable in a frequency range in which the component (21, 22) of the injection moulding machine, which component is connected to the vibrating element (31), can be set to vibrate in a resonant manner,
**characterised in that**
the vibrating element (31) is connected to the injection moulding cylinder (21) and the injection moulding cylinder (21) including the injection nozzle (25) is uncoupled from the tool (12) with respect to vibration.

3. Injection moulding machine according to claim 2,
**characterised in that**
the uncoupling of the injection moulding cylinder (21) including the injection nozzle (25) for the tool (12) is configured as a sliding seal (61).

4. Injection moulding machine according to claim 2,
**characterised in that**
a damping element (62) is disposed between the injection nozzle (25) and the injection moulding cylinder (21).

5. Injection moulding machine according to claims 1 or 2,
**characterised in that**
the vibrating element (31) is placed in a one-part or multi-part housing (71) delimiting its axial elongation.

6. Injection moulding machine according to claims 1 or 2,
**characterised in that**
the vibrating element (31) is disposed between two flanges (72, 73), and
**in that** the flanges (72, 73) are connectable to each other under pretension via tensioning screws (74).

7. Injection moulding machine according to claims 5 or 6,
**characterised in that**
the vibrating element (31) is a piezo vibration generator.

8. Injection moulding machine according to claim 1,
**characterised in that**
the material conveying unit (22) is configured as a worm (23) and **in that** a sliding contact (43) is provided in the connection (42) between the vibrating element (31) and the frequency transmitter (41).

9. Injection moulding machine according to claim 1,
**characterised in that**
the material conveying unit (22) is configured as a worm (23) and **in that** the frequency transmitter (41) is connected to a coil (48) which is disposed in the core of a shell (47) encompassing the drive rod (52), and
**in that** the coil (48) is coupled magnetically with a coil (46) disposed in the core of a shell (45), which coil is connected to the vibrating element (31).

10. Injection moulding machine according to claim 1,
**characterised in that**
the material conveying unit (22) is configured as a piston (24) which is connected via a drive rod (52) to the drive (51).

11. Injection moulding machine according to claim I,
**characterised in that**
the material conveying unit (22) is configured substantially as a tubular piston (28) and is sealed by a cover (27) in the part inclined towards the injection nozzle (25), and
**in that** the vibrating element (31) is disposed between the cover (27) and the drive rod (52).

12. Injection moulding machine according to one of the aforementioned claims,
**characterised in that**
at least one thermoelement (81), which is connected to the frequency transmitter (41), is provided for detecting the temperature of the melt.

13. Injection moulding machine according to claim 12,
**characterised in that**
the frequency transmitter (41) is an ultrasonic transmitter which operates in a frequency range of 10-40 kHz.

## Revendications

1. Presse d'injection comportant un cylindre de moulage par injection qui présente, à sa base, une alimentation de matière (26) en forme d'entonnoir et, à sa tête, une buse d'injection (25) correspondant à un outil, et un dispositif de transport de matière (22) qui est raccordé à un entraînement (51) et peut au minimum être déplacé à l'intérieur du cylindre de moulage par injection (21), un élément vibrant (31) étant prévu pour produire un mouvement relatif entre le cylindre de moulage par injection (21) et le dispositif de transport de matière (22), l'élément vibrant (31) étant relié à un générateur de fréquences (41) réglable dans une gamme de fréquences dans laquelle le composant (21, 22) de la presse d'injection relié à l'élément vibrant (31) peut être vibré à la résonance,
**caractérisée en ce que** l'élément vibrant (31) est agencé entre le dispositif de transport de matière (22) et l'entraînement (51).

2. Presse d'injection comportant un cylindre de moulage par injection qui présente, à sa base, une alimentation de matière (26) en forme d'entonnoir et, à sa tête, une buse d'injection (25) correspondant à un outil, et un dispositif de transport de matière (22) qui est raccordé à un entraînement (51) et peut au minimum être déplacé à l'intérieur du cylindre de moulage par injection (21), un élément vibrant (31) étant prévu pour produire un mouvement relatif entre le cylindre de moulage par injection (21) et le dispositif de transport de matière (22), l'élément vibrant (31) étant relié à un générateur de fréquences (41 ) réglable dans une gamme de fréquences dans laquelle le composant (21, 22) de la presse d'injection relié à l'élément vibrant (31) peut être vibré à la résonance,
**caractérisée en ce que** l'élément vibrant (31) est relié au cylindre de moulage par injection (21) et **en ce que** le cylindre de moulage par injection (21), y compris la buse d'injection (25), est découplé en vibration de l'outil (12).

3. Presse d'injection selon la revendication 2,
**caractérisée en ce que** le découplage du cylindre de moulage par injection (21), y compris la buse d'injection (25) et de l'outil (12), est réalisé par un joint coulissant (61).

4. Presse d'injection selon la revendication 2,
**caractérisée en ce qu'**un élément d'amortissement (62) est placé entre la buse d'injection (25) et le cylindre de moulage par injection (21).

5. Presse d'injection selon les revendications 1 ou 2,
**caractérisée en ce que** l'élément vibrant (31) est placé dans un boîtier (71) en une ou plusieurs parties, limitant son allongement axial.

6. Presse d'injection selon les revendications 1 ou 2,
**caractérisée en ce que** l'élément vibrant (31) est placé entre deux brides (72, 73) et **en ce que** les brides (72, 73) peuvent être reliées entre elles avec précontrainte à l'aide de vis de serrage (74).

7. Presse d'injection selon les revendications 5 ou 6,
**caractérisée en ce que** l'élément vibrant (31) est un oscillateur piézoélectrique.

8. Presse d'injection selon la revendication 1,
**caractérisée en ce que** le dispositif de transport de matière (22) est une vis sans fin (23) et **en ce qu'**un contact à friction (43) est prévu dans la liaison (42) entre l'élément vibrant (31) et le générateur de fréquences (41).

9. Presse d'injection selon la revendication 1,
**caractérisée en ce que** le dispositif de transport de matière (22) est une vis sans fin (23), **en ce que** le générateur de fréquences (41) est relié. à une bobine (48) placée dans un noyau à coquille (47) entourant la tige d'entraînement (52) et **en ce que** la bobine (48) est couplée magnétiquement à une bobine (46) placée dans un noyau à coquille (45), laquelle bobine est reliée à l'élément vibrant (31).

10. Presse d'injection selon la revendication 1,
**caractérisée en ce que** le dispositif de transport de matière (22) est un piston (24) relié à l'entraînement (51) par une tige d'entraînement (52).

11. Presse d'injection selon la revendication 1,
**caractérisée en ce que** le dispositif de transport de matière (22) est conçu essentiellement sous la forme d'un piston (28) tubulaire et est fermé par un bouchon (27) dans sa partie dirigée vers la buse d'injection (25), et **en ce que** l'élément vibrant (31) est placé entre le bouchon (27) et la tige d'entraînement (52).

12. Presse d'injection selon l'une des revendications précédentes,
**caractérisée en ce que** au moins une sonde de température (81), reliée au générateur de fréquences (41), est prévue pour lire la température de la masse fondue.

13. Presse d'injection selon la revendication 12,
**caractérisée en ce que** le générateur de fréquences (41) est un générateur d'ultrasons qui fonctionne dans une gamme de fréquences comprises entre 10 et 40 kHz.
